(19) Europäisches Patentamt

European Patent Office

Office européen des brevets

(11) EP 0 759 386 A2

## (12) EUROPÄISCHE PATENTANMELDUNG

(43) Veröffentlichungstag:
26.02.1997 Patentblatt 1997/09

(51) Int. Cl.⁶: **B60T 8/00**

(21) Anmeldenummer: 96110210.0

(22) Anmeldetag: 25.06.1996

(84) Benannte Vertragsstaaten:
**DE ES FR GB IT SE**

(30) Priorität: 21.08.1995 DE 19530632

(71) Anmelder: **WABCO GmbH**
**D-30453 Hannover (DE)**

(72) Erfinder:
• **Köster, Harald**
**30451 Hannover (DE)**

• **Rode, Konrad**
**30926 Seelze (DE)**
• **Rosendahl, Hartmut**
**30167 Hannover (DE)**
• **Zielke, Frank**
**30890 Barsinghausen (DE)**

(74) Vertreter: **Schrödter, Manfred, Dipl.-Ing.**
**WABCO GmbH**
**Postfach 91 12 80**
**30432 Hannover (DE)**

(54) **Verfahren zur Ermittlung des zwischen Rad und Fahrbahn ausgenutzten Reibwertes**

(57)

2.1 Ein bekanntes Verfahren ermöglicht die Ermittlung des genannten ausgenutzten Reibwertes bei einer ABS-geregelten Bremsung, in welcher dieser Reibwert zugleich der verfügbare ist.

2.2 Das erfindungsgemäße Verfahren ermöglicht bei in bestimmter Weise ausgerüsteten Fahrzeugen die Ermittlung des genannten ausgenutzten Reibwertes ($\mu$) auch bei einer nicht-ABS-geregelten Bremsung. In einer Ausgestaltung schlägt das erfindungsgemäße Verfahren vor, das Fahrzeuggewicht (G) wenigstens näherungsweise zu ermitteln und bei einer Bremsung die momentane Betätigungsenergie (p) zu erfassen sowie aus der Betätigungsenergie (p), dem Fahrzeuggewicht (G) und dem Radbremsfaktor (A) den gesuchten Reibwert ($\mu$) zu berechnen. In einer weiteren Ausgestaltung schlägt das erfindungsgemäße Verfahren vor, bei einer Bremsung die momentane Fahrzeugverzögerung (b) wenigstens näherungsweise zu erfassen und den gesuchten Reibwert ($\mu$) aus dieser und der Erdbeschleunigung (g) zu berechnen.

2.3 Anwendungsgebiet der Erfindung ist die Fahrzeugtechnik.

EP 0 759 386 A2

Printed by Rank Xerox (UK) Business Services
2.13.15/3.4

# Beschreibung

Die Erfindung betrifft ein Verfahren zur wenigstens näherungsweisen Ermittlung des bei wenigstens einer Bremsung zwischen dem wenigstens einen Rad eines Fahrzeugs und der Fahrbahn ausgenutzten Reibwertes gemäß dem Oberbegriff der Patentansprüche 1 und 3.

Es erscheint sinnvoll, zunächst einige für das Verständnis der Erfindung wesentliche Begriffe zu erläutern.

Der Begriff "Betätigungsenergie" ist nicht streng physikalisch zu verstehen, sondern als Sammelbegriff für alle Medien, bei deren Zuführung eine Radbremse eine Bremskraft erzeugt.

Der "Radbremsfaktor" ist für jede Baugruppe aus Rad, Radbremse, Zuspanneinrichtung und etwa vorhandener Übertragungseinrichtung eine praktisch feste Größe. In dem Radbremsfaktor sind die Kenndaten der Zuspanneinrichtung (z. B. Bremszylinder), Übersetzungsverhältnisse einer etwa vorhandenen Übertragungseinrichtung, die Kenndaten der eigentlichen Radbremse (z. B. inneres Übersetzungsverhältnis, innerer Reibwert), Wirkungsgrade dieser Einrichtungen sowie die Radgröße zusammengefaßt. Der Radbremsfaktor gibt die Beziehung zwischen der einer Radbremse zugeführten Betätigungsenergie und der daraus folgenden Bremskraft zwischen dem zugeordneten Rad und der Fahrbahn an. Diese Bremskraft wirkt in der Aufstandsfläche des Rades. Werden der Radbremsfaktor mit "A", die jeweilige Betätigungsenergie mit "E" und die daraus resultierende Bremskraft mit "B" bezeichnet, so gilt in allgemeiner Form

$$B = A \cdot E \qquad (I)$$

Dabei ist im allgemeinen, wie auch im weiter unten beschriebenen Ausführungsbeispiel, unter "Betätigungsenergie" die nach Abzug der Ansprechenergie verbleibende "wirksame Betätigungsenergie" zu verstehen. Die Ansprechenergie beruht auf Ansprechwiderständen, die auf Reibung und Rückstellkräfte in den Bremskomponenten zurückzuführen sind. Mit dem Nachteil ungenauerer Ergebnisse kann die Erfindung aber statt mit der wirksamen auch mit der zugeführten Betätigungsenergie durchgeführt werden.

Eine "Referenzgeschwindigkeit" wird in mit einem Blockierschutzsystem, welches nachstehend wie üblich "ABS" genannt wird, ausgerüsteten Fahrzeugen in dem ABS-Steuergerät erzeugt. Sie beruht auf einer oder mehreren Radgeschwindigkeit(en) bei Beginn einer Bremsung und dem wahren Verlauf oder einem prognostizierten Verlauf der Radgeschwindigkeit(en) während der Bremsung und stellt eine Ersatzgröße für die Fahrzeuggeschwindigkeit dar, anhand derer das ABS-Steuergerät die Blockierneigung des bzw. der gebremsten Fahrzeugräder beurteilt und den Ablauf einer ABS-Regelung steuert.

In Fahrzeugen mit mehreren gebremsten Achsen bzw. Achsgruppen muß die Betätigungsenergieverteilung zwischen den Radbremsen der Achsen bzw. Achsgruppen stabilitätsoptimierend erfolgen. Mit "Achsgruppe" sind dabei mehrere Achsen gemeint, die so nahe beieinander angeordnet und/oder so aufeinander abgestimmt sind, daß sie wie eine Achse wirken. Beispielsweise bildet ein Doppelachsaggregat mit einem Achsabstand bis zu 1,6 m eine Achsgruppe, wenn die Achsen untereinander hinsichtlich der Lastverteilung und der Reibwertausnutzung zwischen Rädern und Fahrbahn statisch und dynamisch ausgeglichen sind.

Dabei bedeutet "stabilitätsoptimierende Betätigungsenergieverteilung", daß das Bremssystem bei Bremsungen ohne Eingriff eines etwa vorhandenen ABS, mit anderen Worten bei nicht-ABS-geregelten Bremsungen, eine solche Verteilung der Betätigungsenergie zwischen den Radbremsen vornimmt, die an jeder Achse bzw. Achsgruppe soviel Bremskraft zwischen dem Rad oder den Rädern und der Fahrbahn erzeugt, daß zwischen allen Rädern und der Fahrbahn die gleiche Reibwertausnutzung stattfindet. Folge einer solchen Betätigungsenergieverteilung ist eine optimale Fahrzeugverzögerung bei guter Richtungsstabilität. Das Bremssystem kann eine solche Betätigungsenergieverteilung vollständig oder angenähert bewirken. Herkömmliche Bremssysteme weisen zum Zwecke dieser Betätigungsenergieverteilung üblicherweise einen lastabhängigen Bremskraftregler auf, wie er aus dem Stand der Technik bekannt ist und üblicherweise, wie auch nachstehend, mit der Kurzform "ALB" bezeichnet wird, während Bremssysteme mit elektrischer Steuerung, nachstehend mit der üblichen Kurzform "EBS" bezeichnet, diese Verteilung im Normalfall durch entsprechende Ausbildung eines EBS-Steuergerätes erzielen. Näheres zu dieser Problematik und Ansätze zur Erzielung einer solchen Betätigungsenergieverteilung in Fahrzeugen mit EBS sind beispielsweise in der EP 0 548 488 A1 und der US 5 338 106 A angegeben, die beide auf dieselbe deutsche Stammanmeldung zurückgehen.

Aus der EP 0 453 811 A2, dort insbesondere Seite 5 unten bis Seite 6 oben, ist ein Verfahren der eingangs genannten Art bekannt. Dieses Verfahren ermittelt bei einer ABS-geregelten Bremsung den verfügbaren und damit zugleich den ausgenutzten Reibwert zwischen einem Rad und der Fahrbahn aus dem Wiederhochlaufverhalten des Rades (charakteristics of the wheel as it starts to roll back up), also aus der Radbeschleunigung, nach dem Erreichen eines Minimums der Radgeschwindigkeit.

Der Erfindung liegt die Aufgabe zugrunde, ein Verfahren anzugeben, mit dem auch bei einer nicht-ABS-geregelten Bremsung wenigstens näherungsweise der zwischen den Rädern und der Fahrbahn ausgenutzte Reibwert ermittelt werden kann.

Diese Aufgabe wird durch die in den Patentansprüchen 1 und 3 angegebene Erfindung gelöst. Vorteilhafte Ausgestaltungen und Fortbildungen sind in den Unteransprüchen angegeben.

Die Erfindung kann in jedem Fahrzeug eingesetzt werden, welches wenigstens ein gebremstes Rad aufweist. Das Fahrzeug muß dazu, je nach gewählter Ausgestaltung der Erfindung, mit einem oder mehreren Betätigungsenergiesensoren (je nach Zahl der Radbremsen), einem Verzögerungssenor für die Fahrzeugverzögerung bzw. einem Lastsensor für das Fahrzeuggewicht und einer deren Signale verarbeitenden Auswerteschaltung ausgerüstet sein bzw., soweit diese Einrichtungen nicht vorhanden sind, ausgerüstet werden. Das Fahrzeuggewicht kann allerdings auch mit fahrzeugfremden Mitteln, beispielsweise einer Waage, ermittelt werden.

Gute Voraussetzungen für den Einsatz der Erfindung bieten Fahrzeuge mit EBS, weil zu einem EBS ein elektrisches Steuergerät gehört, welches mit geringem Aufwand zu der o. g. Auswerteschaltung fortgebildet werden kann. Häufig gehören zum EBS auch ein oder mehrere Betätigungsenergiesensor(en) und/oder ein oder mehrere Lastsensor(en), in welchem Falle sich der Aufwand für den Einsatz der Erfindung weiter verringert.

Gute Voraussetzungen für den Einsatz der Erfindung bieten auch mit ABS ausgerüstete Fahrzeuge, weil mittels der Drehwinkelsignale der dazugehörigen Radsensoren bzw. aus dem zeitlichen Verlauf der in dem ABS-Steuergerät erzeugten Referenzgeschwindigkeit die momentane Fahrzeugverzögerung genau bzw. näherungsweise berechnet werden kann und dadurch ein Verzögerungssensor je nach gewählter Ausgestaltung der Erfindung, sich erübrigt.

In Fahrzeugen, die sowohl mit EBS mit Betätigungsenergiesensor(en) als auch mit ABS ausgerüstet sind, ist die Erfindung praktisch ohne Mehraufwand durchführbar, weil sie in diesem Falle sowohl die vorstehend erwähnte Berechnung der momentanen Fahrzeugverzögerung als auch eine genaue bzw. näherungsweise Berechnung des Fahrzeuggewichts ermöglicht.

In mit einem ABS ausgerüsteten Fahrzeugen ermöglicht die Erfindung während einer ABS-geregelten Bremsung auch die wenigstens näherungsweise Ermittlung des zwischen den Rädern und der Fahrbahn verfügbaren Reibwertes, weil bei einer solchen Bremsung der ausgenutzte Reibwert gleich dem verfügbaren ist. Ferner bietet die Erfindung die Möglichkeit, die während der ABS-geregelten Bremsung gewonnene Aussage über den verfügbaren Reibwert noch während der jeweiligen Bremsung und/oder bei folgenden ABS-geregelten Bremsungen zur Optimierung der ABS-Regelung, z. B. bei deren Regelungsbeginn, auszuwerten.

Die Erfindung ist mit jeder Art Betätigungsenergie durchführbar, beispielsweise mit elektrischer Energie oder mit Druck. Im Falle des Einsatzes von Druck sind als Energieträger flüssige oder gasförmige Druckmittel, z. B. Druckluft, gebräuchlich. Werden als Betätigungsenergie Druck eingesetzt und der momentane zugeführte Druck bzw. der momentane wirksame Druck oder Wirkdruck mit "p" bezeichnet, nimmt die oben angegebene allgemeine Beziehung (I) die Form

$$B = A \cdot p \qquad (II)$$

an, wobei für den Druck bzw. den wirksamen oder Wirkdruck das oben für die Betätigungsenergie bzw. die wirksame Betätigungsenergie Ausgeführte entsprechend gilt.

Weitere Vorteile der Erfindung werden in deren nunmehr folgender, sich auf ein zeichnerisch dargestelltes Ausführungsbeispiel stützender, Erläuterung angegeben.

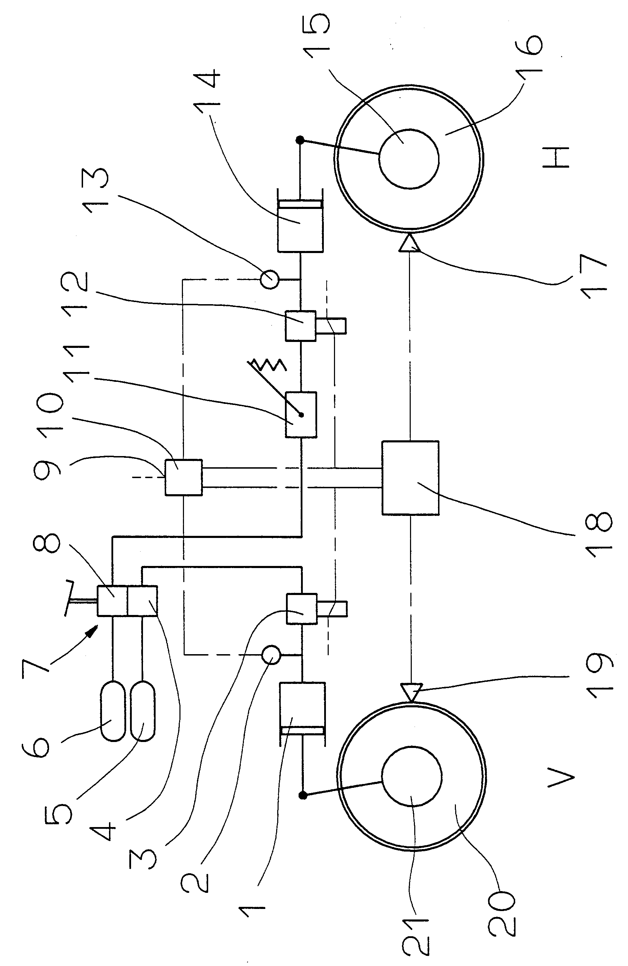

Mit durchgezogenen Verbindungslinien für Betätigungsenergieleitungen und strichpunktierten Verbindungslinien für Signalleitungen zeigt die Zeichnung schematisch zwei Räder (16, 20) und ein Bremssytem eines Fahrzeugs.

Die Räder (16, 20) befinden sich an verschiedenen Achsen bzw. Achsgruppen (H, V), die im folgenden als "Hinterachse (H)" bzw. "Vorderachse (V)" bezeichnet werden.Weiter unten werden die Buchstaben "H" und "V" auch als Beiwerte zur Kennzeichnung der Zuordnung von Größen zur Hinterachse (H) bzw. zur Vorderachse (V) verwendet.

Das dargestellte Bremssystem enthält eine Grundausstattung und eine Fortbildung derselben. Das Bremssystem setzt Druck als Betätigungsenergie und Druckluft oder ein flüssiges Druckmittel als Energieträger ein, so daß es als Betätigungsenergieleitungen Druckmittelleitungen aufweist.

Die Grundausstattung des Bremssystems besteht aus einer Druckbeschaffungsanlage, einer Radbremse (15 bzw. 21) für jedes Rad (16 bzw. 20) mit jeweils zugeordnetem Bremszylinder (14 bzw. 1), einer Steuereinrichtung (7, 11) und einer Einrichtung (2, 10, 13) zur Reibwert-Ermittlung.

Von der Druckbeschaffungsanlage sind nur jeweils einer Radbremse (15 bzw. 21) zugeordnete Druckspeicher (6 bzw. 5) dargestellt. Zu der Druckbeschaffungsanlage gehören außerdem ein oder mehrere Druckerzeuger und Druckmittelaufbereitungs- und Schutzeinrichtungen üblicher Bauarten, die nicht dargestellt sind. Jeweils ein Druckspeicher (6 bzw. 5) ist über eine Druckmittelleitung mit einem zugeordneten Bremszylinder (14 bzw. 1) verbindbar. Zwischen jeder Radbremse (15 bzw. 21) und dem jeweils zugeordneten Bremszylinder (14 bzw. 1) sind nicht näher bezeichnete Übertragungseinrichtungen angeordnet.

Die Steuereinrichtung der Grundausstattung besteht aus einem vom Fahrzeugführer betätigbaren Bremsventil (7) und einem ALB (11). Das Bremsventil (7) ist zweikreisig und mit jeweils einem Kreis (8 bzw. 4) in der Druckleitung zwischen einem Druckspeicher (6 bzw. 5) und dem zugeordneten Bremszylinder (14 bzw. 1) angeordnet. Das Bremsventil (7) weist ein Bedienungsorgan auf, welches in der Zeichnung als Pedal angedeutet ist. Der ALB (11) ist in der Druckmittelleitung zwischen dem Ausgang des einen Kreises (8) des Bremsventils (7) und dem Bremszylinder (14) der Hinterachse (H) angeordnet. Übt der Fahrzeugführer auf das Bedienungsorgan eine Kraft aus, so stellt jeder Kreis (8 bzw. 4) des Bremsventils (7) solange eine Verbindung zwischen seinem Ausgang und dem jeweiligen Druckspeicher (6 bzw. 5) her, bis an dem Ausgang ein von der genannten Kraft bestimmter Ausgangsdruck ansteht. Hält der Fahrzeugführer anschließend die genannte Kraft aufrecht, so hält auch jeder Kreis (8 bzw. 4) des Bremsventils (7) den genannten Ausgangsdruck aufrecht. Mindert der Fahrzeugführer die auf das Bedienungsorgan ausgeübte Kraft, so mindert auch jeder Kreis (8 bzw. 4) entsprechend den Ausgangsdruck.

Der Ausgangsdruck des dem Bremszylinder (1) der Vorderachse (V) zugeordneten Kreises (4) des Bremsventils (7) baut sich auch in diesem Bremszylinder (1) auf. Der Ausgangsdruck des dem Bremszylinder (14) der Hinterachse (H) zugeordneten Kreises (8) des Bremsventils (7) wird von dem ALB (11) entsprechend der Belastung der Hinterachse (H), also der Hinterachslast, gemindert, so daß der sich in dem Bremszylinder (14) aufbauende Druck abhängig von der Hinterachslast geregelt wird. Der ALB (11) besorgt dadurch eine genau stabilitätsoptimierende oder wenigstens eine angenähert stabilitätsoptimierende Druckverteilung zwischen den Bremszylindern (14) und (1) bzw. den zugeordneten Radbremsen (15) und (21). Das bedeutet mit anderen Worten, wenn der Reibwert zwischen dem jeweiligen Rad und der Fahrbahn in üblicher Weise mit "µ" bezeichnet wird, daß der ALB (11) wenigstens angenähert für eine gleiche Reibwertausnutzung zwischen dem Rad (20) der Vorderachse (V) sowie dem Rad (16) der Hinterachse (H) und der Fahrbahn sorgt, mithin

$$\mu H = \mu V \qquad (III)$$

gesetzt werden kann.

Alle bisher erwähnten Komponenten des Bremssystems sind in ihrem Aufbau und in ihrer Wirkungsweise bekannt und durch marktgängige Geräte ausführbar.

Die Einrichtung zur Reibwert-Ermittlung (2, 10, 13), besteht in einer ersten Ausgestaltung aus den Druck in jeweils einem Bremszylinder (14 bzw. 1) erfassenden Drucksensoren (13 bzw. 2) und einer Auswerteschaltung (10).

Die Auswerteschaltung (10) besitzt nicht näher bezeichnete Eingänge sowie wenigstens einen Ausgang (9) und ist in üblicher Weise elektrisch so bestückt, beispielsweise mit Mikroprozessoren, und/oder so programmiert, daß sie die im folgenden beschriebenen Operationen ausführen kann.

In der Auswerteschaltung (10) sind als Festwerte des jeweiligen Fahrzeugs bzw. des Fahrzeugtyps die Ansprechdrücke der Radbremsen (15 bzw. 21) sowie die Radbremsfaktoren (AH) der Hinterachse (H) und (AV) der Vorderachse (V) gespeichert.

Die Drucksensoren (13 bzw. 2) sind elektrisch mit Eingängen der Auswerteschaltung (10) verbunden, wandeln die von ihnen gemessenen Drücke in elektrische Drucksignale um und geben diese als variable Werte an die Auswerteschaltung (10) ab. Als weiterer variabler Wert wird der Auswerteschaltung (10) das Fahrzeuggewicht (G) zugeführt. Der variable Wert (G) des Fahrzeuggewichts ändert sich im Regelfall während einer Fahrt nicht. Er kann deshalb im einfachsten Falle durch Wägung des Fahrzeugs ermittelt und von Hand in die Auswerteschaltung (10) eingegeben werden. Er kann aber auch in bekannter Weise mittels eines oder mehrerer nicht dargestellter Lastsensoren gewonnen und von diesen der Auswerteschaltung (10) zugeführt werden.

Der bei einer Bremsung zwischen einem Rad und der Fahrbahn ausgenutzte Reibwert ist das Verhältnis der zwischen dem Rad und der Fahrbahn wirkenden Bremskraft zu der zwischen dem Rad und der Fahrbahn wirkenden Kraft normal zur Fahrbahn. Letztere Kraft ist die Radlast, die unter der vorliegend getroffenen Annahme eines Zweiradfahrzeugs zugleich die jeweilige Achslast, also die Vorderachslast (GV) bzw. die Hinterachslast (GH) ist. Also:

$$\mu V = \frac{BV}{GV} \qquad (IV)$$

$$\mu H = \frac{BH}{GH} \qquad (V)$$

Andererseits läßt sich ein am Fahrzeug ausgenutzter mittlerer Reibwert (µG) als das Verhältnis der auf das Fahrzeug wirkenden gesamten Bremskraft BGes = BV + BH = AV · pV + AH · pH zu dem Fahrzeuggewicht (G) definieren. Aus (III) bis (V) läßt sich ableiten, daß der genannte mittlere Reibwert (µG) und die an den Rädern (16, 20) ausgenutzten Reibwerte (µV bzw. µH) gleich sein müssen. Mit der Kenntnis des am Fahrzeug ausgenutzten mittleren Reibwerts (µG) wird also zugleich die Kenntnis der an den Rädern (16, 20) ausgenutzten Reibwerte (µV bzw. µH) gewonnen.

Deshalb gilt

$$\mu G = \mu V = \mu H = \mu = \frac{AV \cdot pV + AH \cdot pH}{G} \qquad (VI)$$

Die Beziehung (VI) ist in die Auswerteschaltung (10) als Verarbeitungsalgorithmus für die oben genannten Festwerte und variablen Werte einprogrammiert.

Bei einer Bremsung mindert die Auswerteschaltung (10) zunächst die Drucksignale der Drucksensoren (13 bzw. 2) um den Ansprechdrücken der Radbremsen (15 bzw. 21) entsprechende Werte und berechnet dann mit den so ermittelten Wirkdrücken (pV, pH) den gesuchten Reibwert gemäß (VI). Für diesen bzw. für gleichwertige Reibwerte wird im folgenden nur noch das Zeichen "µ" verwendet.

In (VI) können nach dem dynamischen Grundgesetz (Newton)

der Zähler = m · b und

der Nenner = m • g

gesetzt werden mit der Fahrzeugmasse m, der Fahrzeugverzögerung b und der Erdbeschleunigung g, so daß auch gilt

$$\mu = \frac{b}{g} \qquad \text{(VII)}.$$

Diese Erkenntnis macht sich eine andere Ausgestaltung der Einrichtung zur Reibwert-Ermittlung zunutze. Im Falle dieser Ausgestaltung sind in die Auswerteschaltung (10) anstelle (VI) die Beziehung (VII) als Verarbeitungsalgorithmus einprogrammiert und statt der Ansprechdrücke der Radbremsen (15, 21) und der Radbremsfaktoren (AH, AV) die Erdbeschleunigung (g) als Festwert in der Auswerteschaltung (10) gespeichert. Statt der Drucksensoren (2, 13) ist in diesem Falle ein nicht dargestellter Verzögerungssensor erforderlich, dessen Verzögerungssignale der Auswerteschaltung (10) als variable Werte zugeführt werden. Die Zuführung des Fahrzeuggewichts (G) als weiterer variabler Wert ist in diesem Fall nicht erforderlich.

Die Ausrüstung der Einrichtung zur Reibwert-Ermittlung mit einem Verzögerungssensor und die Zuführung von dessen Verzögerungssignalen zu der Auswerteschaltung (10) kann aber auch sinnvoll sein in der zuerst beschriebenen Ausgestaltung der Einrichtung zur Reibwert-Ermittlung, welche (VI) als Verarbeitungsalgorithmus nutzt. Die Verzögerungssignale ermöglichen nämlich eine genaue oder näherungsweise Ermittlung des Fahrzeuggewichts (G) und ersparen damit eine gesonderte Erfassung desselben. Diese Ausgestaltung geht aus von dem Ansatz nach dem dynamischen Grundgesetz (Newton)

$$m = \frac{G}{g} = \frac{BGes}{b} \qquad \text{(VIII)}$$

woraus sich ableiten läßt:

$$G = \frac{AV \cdot pV + AH \cdot pH}{b} \cdot g \qquad \text{(IX)}.$$

(IX) ist in dieser Ausgestaltung zusätzlich zu (VI) als Verarbeitungsalgorithmus in die Auswerteschaltung (10) einprogrammiert. Außerdem ist die Auswerteschaltung (10) in dieser Ausgestaltung so programmiert, daß sie in einer oder mehreren Bremsungen, die einer oder mehreren mit der Ermittlung des Reibwertes (μ) gemäß (VI) verknüpften Bremsungen vorausgehen, zunächst die momentanen Wirkdrucksignale (pV, pH), wie oben beschrieben, aus den Drucksignalen der Drucksensoren (13 bzw. 2) errechnet und die den Drucksignalen jeweils zugeordnete momentane Fahrzeugverzögerung (b) aus den Verzögerungssignalen erfaßt und dann gemäß (IX) das Fahrzeuggewicht (G) errechnet. Mit dem so gewonnen Fahrzeuggewicht (G) führt die Auswerteschaltung (10) dann die Berechnung des Reibwertes (μ) gemäß (VI) durch.

Diese Ausgestaltung ist insbesondere dann vorteilhaft, wenn im Fahrzeug ohnehin aus anderen Gründen die Fahrzeugverzögerung gemessen und/oder berechnet oder geeignete Meßeinrichtungen, z. B. Radsensoren vorhanden sind, wie es z. B. in Fahrzeugen mit EBS und/oder ABS der Fall ist.

An ihrem Ausgang (9) gibt die Auswerteschaltung (10) den von ihr berechneten Reibwert aus. Dieser kann mittels eines nicht dargestellten Anzeigeinstruments angezeigt und/oder auf eine andere zweckdienliche Weise ausgewertet werden.

Nunmehr werde die oben erwähnte Fortbildung der Grundausstattung des Bremssystems betrachtet. Diese Fortbildung besteht aus einer weiteren Steuereinrichtung in Gestalt eines ABS. Das ABS besteht aus einem ABS-Steuergerät (18) sowie je einem Radsensor (17, 19) und einem ABS-Modulator (12, 3) für jedes Rad. Der ABS-Modulator (3) für das Rad (20) der Vorderachse (V) ist in der Druckmittelleitung zwischen dem Ausgang des zugeordneten Kreises (4) des Bremsventils (7) und dem zugeordneten Bremszylinder (1) angeordnet. Der ABS-Modulator (12) für das Rad (16) der Hinterachse (H) ist in der Druckmittelleitung zwischen dem ALB (11) und dem zugeordneten Bremszylinder (14) angeordnet. Die Radsensoren (17, 19) sind elektrisch mit Eingängen des ABS-Steuergerätes (18) verbunden, die elektrischen Steuerteile der ABS-Modulatoren (12, 3) sind mit Ausgängen des ABS-Steuergerätes (18) verbunden. Diese Ausgänge des ABS-Steuergerätes (18) sind auch mit bisher nicht erwähnten Eingängen der Auswerteschaltung (10) verbunden.

Die Auswerteschaltung (10) und das ABS-Steuergerät(18) sind als selbständige Baugruppen dargestellt, werden aber in der Regel baulich und funktional zusammengefaßt, kombiniert und integriert ausgestaltet.

Die Radsensoren (17, 19) geben Drehwinkelsignale an das ABS-Steuergerät (18) ab. Dieses erzeugt mittels dieser Signale die weiter oben erwähnte Referenzgeschwindigkeit und verwendet diese, oft in Verbindung mit anderen Größen, zur Prüfung, ob ein Rad oder beide Räder (16, 20) zum Blockieren neigen. Stellt das ABS-Steuergerät (18) keine Blockierneigung fest, so gibt es keine Steuersignale an die ABS-Modulatoren (12, 3). Die ABS-Modulatoren (12, 3) bleiben dadurch durchgängig und lassen zu, daß sich der von dem Bremsventil (7) bzw. von dem ALB (11) bestimmte Druck in den Bremszylindern (14) bzw. (1) aufbauen kann. Stellt das ABS-Steuergerät (18) jedoch eine Blockierneigung fest, so gibt es Steuersignale an den betreffenden ABS-Modulator oder die ABS-Modulatoren (12 bzw. 3) ab, woraufhin dieser bzw. diese den Druckaufbau in dem bzw. den betreffenden Bremszylindern (14 bzw. 1) so begrenzen bzw. vorhandenen Druck soweit mindern, daß die Blockierneigung verschwindet. Dabei gestaltet das ABS-Steuergerät (18) die Größe und/oder den zeitlichen Verlauf der an den/die ABS-Modulator(en) (12) bzw. (3) abgegebenen Steuersignale nach einprogrammierten Regelalgorithmen, um einen Blokkierschutz mit guter Reibwertausnutzung bei geringem Druckmittelverbrauch zu gewährleisten.

Auch das ABS und seine Komponenten entsprechen, soweit bisher beschrieben, in ihrem Aufbau, in ihren Wirkungsweisen und in ihrem Zusammenspiel üblichen Ausführungen, wie sie beispielsweise aus der bereits erwähnten EP 0 453 811 A2 bekannt sind.

In dem Falle, daß bei einer Bremsung das ABS einsetzt, die Bremsung also ABS-geregelt ist, ist der von der Auswerteschaltung (10) gemäß (VI) bzw. (VII) berechnete ausgenutzte Reibwert ($\mu$) auch der verfügbare.

Die von dem ABS-Steuergerät (18) angewandten Regelalgorithmen können nun zwecks Optimierung der ABS-Regelung durch entsprechende Anpassung von Regelparametern an den verfügbaren Reibwert ($\mu$) abgestimmt werden. Diesem Zweck dient die bereits erwähnte Verbindung von Eingängen der Auswerteschaltung (10) mit den Ausgängen des ABS-Steuergerätes (18). Zum gleichen Zweck müssen ein Ausgang, z. B. der Ausgang (9), der Auswerteschaltung (10) in nicht dargestellter Weise mit wenigstens einem Eingang des ABS-Steuergerätes (18) verbunden sein und letzteres auf eine entsprechende Signalverarbeitung zur Anpassung seiner Regelalgorithmen ausgelegt sein. Über die soeben genannte Verbindung erfährt die Auswerteschaltung (10), daß das ABS-Steuergerät (18) Steuersignale abgibt, mithin eine ABS-Regelung erfolgt, woraufhin sie den verfügbaren Reibwert ($\mu$) als ihr Rechenergebnis über ihren betreffenden Ausgang an das ABS-Steuergerät (18) abgibt.

Aufgrund des verfügbaren Reibwertes ($\mu$) anpaßbare Regelparameter des ABS-Steuergerätes (18) können beispielsweise sein die Referenzgeschwindigkeit, Druckgradienten, Radbeschleunigungsschwellen.

Die Fortbildung der Grundausstattung des Bremssystems um das ABS kann sich sehr vorteilhaft auf die Einrichtung zur Reibwert-Ermittlung auswirken. Die Radsensoren (17, 19) können nämlich zur Erfassung der momentanen Fahrzeugverzögerung (b) herangezogen werden. Zu diesem Zweck müssen ihre Drehwinkelsignale in der Auswerteschaltung (10) und/oder in dem ABS-Steuergerät (18) zweimal nach der Zeit differenziert werden. Andererseits kann die momentane Fahrzeugverzögerung in der Auswerteschaltung (10) und/oder in dem ABS-Steuergerät (18) aus dem zeitlichen Verlauf der Referenzgeschwindigkeit genau bzw. näherungsweise berechnet werden. Das ABS ermöglicht also, alle weiter oben und im folgenden beschriebenen, die momentane Fahrzeugverzögerung (b) auswertenden Operationen ohne zusätzlichen Geräteaufwand und deshalb praktisch ohne Mehraufwand auszuführen.

Nun sei angenommen, nur eines der Räder (16, 20), beispielsweise das Rad (20) der Vorderachse (V), sei gebremst. Dann läge der Fall eines Fahrzeugs mit nur einem gebremsten Rad vor. In diesem Fall gelten (IV) und (VIII) direkt sowie (VI) und (IX) nach Streichung des der Hinterachse (H) zugeordneten Gliedes AH • pH. Trägt in diesem Fall das Rad (20) auch das gesamte Fahrzeuggewicht (G) so ist in (IV) die Vorderachslast (GV) durch das Fahrzeuggewicht (G) zu ersetzen. In diesem Fall wären etwaige andere Räder des Fahrzeugs nichttragende Balancier- oder Stützräder.

Nun sei angenommen, die Räder (16, 20) mit den zugeordneten Radbremsen (15, 21) und Bremszylindern (14, 1) befinden sich an der jeweiligen Achse (V bzw. H) auf einer Fahrzeugseite, beispielsweise der rechten, und die Achsen (V bzw. H) weisen auf der anderen Fahrzeugseite, also der linken, ebenfalls Räder, Radbremsen und Bremszylinder auf. Mit den Beiwerten "L" für die linke und "R" für die rechte Fahrzeugseite sowie unter der Annahme, daß die Räder, Bremszylinder, Radbremsen und Übertragungsteile, wie üblich, links und rechts gleich sind, wird die Beziehung (VI) in diesem Fall zu

$$\mu = \frac{AV(pVL+pVR)+AH(pHL+pHR)}{G} \qquad (X)$$

Der gemäß (VII) wie auch der gemäß (X) berechnete Reibwert ($\mu$) ist jeweils der Mittelwert aus den zwischen den Rädern auf der linken Fahrzeugseite und den Rädern auf der rechten Fahrzeugseite und der Fahrbahn ausgenutzten Reibwerten, also

$$\mu = \frac{\mu L+\mu R}{2} \qquad (XI)$$

Soll in diesem Fall der auf die Räder einer Fahrzeugseite entfallende Reibwert ermittelt werden, so ist dies nach zwei Ansätzen möglich. Der erste Ansatz geht von der Aufteilung des gemäß (VII) bzw. (X) berechneten Reibwertes ($\mu$) nach dem Verhältnis der Summe der auf dieser Fahrzeugseite wirksamen Drücke zu der Summe der auf der anderen Fahrzeugseite wirksamen Drücke aus und setzt nach geeigneter Umformung (XI) ein. Die zugehörigen, in die Auswerteschaltung (10) einzuprogrammierenden, Verarbeitungsalgorithmen lauten:

$$\mu L = \frac{2\mu}{1+\dfrac{pVL+pHR}{pVR+pHR}} \qquad (XII)$$

$$\mu R = \frac{2\mu}{1+\dfrac{pVL+pHL}{pVR+pHR}} \qquad (XIII)$$

Alternativ kann die Aufteilung des gemäß (VII) bzw. (X) berechneten Reibwertes ($\mu$) auf die Fahrzeugseiten auch nach dem Verhältnis der Summen der auf den Fahrzeugseiten auftretenden Bremskräfte aufgeteilt werden. Zu diesem Zweck sind in (XII) und (XIII) statt des jeweiligen Druckes p die jeweilige Bremskraft B = A • p einzusetzen.

Der zweite Ansatz zur Ermittlung des auf die Räder einer Fahrzeugseite entfallenden Reibwertes geht ebenfalls von der Annahme gleicher Räder, Bremszylinder, Radbremsen und Übertragungsteile links und rechts aus und außerdem von der Annahme, daß die Räder einer Achse beiderseits der Fahrzeuglängsachse den gleichen Fahrzeuggewichtsanteil, der z. B. an der Vorderachse ($\frac{GV}{2}$) ausmacht, tragen.

Dieser Ansatz setzt sodann die Beziehung für den Reibwert an einer Fahrzeugseite zu der Beziehung für den Reibwert an der betreffenden Achse zueinander ins Verhältnis und führt nach dem Einsetzen von (VII) zu den zugehörigen, in die Auswerteschaltung (10) einzuprogrammierenden, Verarbeitungsalgorithmen:

$$\mu L = \frac{2pVL}{pVL+pVR} \cdot \frac{b}{g} \qquad (XIV)$$

$$\mu R = \frac{2pVR}{pVL+pVR} \cdot \frac{b}{g} \qquad (XV)$$

(XIV) und (XV) lassen sich entsprechend auch mit den Drücken der Radbremsen der Hinterachse (H) formulieren. Für den Fall, daß die Räder, Bremszylinder, Radbremsen und Übertragungsteile an einer Achse beiderseits der Fahrzeuglängsachse nicht gleich sind, müssen in (XIV) und (XV) die jeweiligen Drücke durch die jeweiligen Bremskräfte B = A • p ersetzt werden.

Es ist leicht ersichtlich, daß die Einrichtung zur Reibwert-Ermittlung zur Feststellung der auf die Räder beiderseits der Fahrzeuglängsachse entfallenden Reibwerte Drucksensoren voraussetzt. Während aber diese Voraussetzung im Fall der Anwendung von (XII) und (XIII) für alle Bremszylinder gilt, gilt sie für den Fall der Anwendung von (XIV) und (XV) nur für die Bremszylinder derjeniegen Achse, deren Drücke gerade zur Feststellung der auf die Räder der Fahrzeugseiten entfallenden Reibwerte herangezogen werden.

Es ist auch leicht ersichtlich, daR sich (XII) und (XIII) einerseits sowie (XIV) und (XV) andererseits strukturell dadurch unterscheiden, daß erstgenannte von der Erfassung des Fahrzeuggewichts (G) und letztere von der Erfassung der Fahrzeugverzögerung (b) ausgehen. Dieser strukturelle Unterschied wird jedoch aufgehoben, wenn das Fahrzeuggewicht (G) unter Anwendung von (IX) mittels der Fahrzeugverzögerung (b) berechnet und in (X) und damit indirekt in (XII) sowie in (XIII) eingesetzt wird.

Die Ermittlung des auf die Räder einer Fahrzeugseite entfallenden Reibwertes ist von besonderer Bedeutung bei der beschriebenen Fortbildung des Bremssystems um ein ABS. Bei Unterschieden zwischen den auf beiden Fahrzeugseiten verfügbaren Reibwerten, dem sogenannten μ-Split, ist es möglich, daß das ABS nur an einer Fahrzeugseite anspricht. Die mittels der Beziehungen (XII) und (XIII) bzw. (XIV) und (XV) erlangte Kenntnis des verfügbaren Reibwertes (μ) auf dieser Fahrzeugseite ermöglicht auch in diesem Fall die oben erwähnte Optimierung der ABS-Regelung.

Der Fachmann erkennt, daß das vorstehend beschriebene Ausführungsbeispiel nur einen beispielhaften Anwendungsfall der Erfindung beschreibt, und daß die Erfindung sich in allen Bremssystemen ausführen läßt, in denen ihre in den Patentansprüchen zum Ausdruck kommenden Merkmale realisierbar sind. Insbesondere ist die Erfindung auch für die schon erwähnten elektrisch gesteuerten Bremssysteme (EBS) geeignet, wie eines in den bereits erwähnten EP 0 548 488 A1 bzw. US 5,338106 A beschrieben ist. In diesen Fall ist es, wie in dem beschriebenen, üblich, den ALB (11) des vorstehend beschriebenen Ausführungsbeispiels durch eine elektronische stabilitätsoptimierende oder angenähert stabilitätsoptimierende Betätigungsenergieverteilung zu ersetzen.

**Patentansprüche**

1. Verfahren zur wenigstens näherungsweisen Ermittlung des bei wenigstens einer Bremsung zwischen dem wenigstens einen mit einer durch Betätigungsenergie betätigten Radbremse (15 bzw. 21) versehenen Rad (16 bzw. 20) eines Fahrzeugs und der Fahrbahn ausgenutzten Reibwertes (μ),
dadurch gekennzeichnet, daß

   a) das Fahrzeuggewicht (G) wenigstens näherungsweise ermittelt,

   b) bei der Bremsung

   ba)die momentane Betätigungsenergie (p) erfaßt,

   bb)aus der in ba) genannten Betätigungsenergie (p), dem in a) genannten Fahrzeuggewicht (G) und dem Radbremsfaktor (A) der gesuchte Reibwert (μ) berechnet

   werden.

2. Verfahren nach Anspruch 1,
dadurch gekennzeichnet,
daß die wenigstens näherungsweise Ermittlung des Fahrzeuggewichts (G) in wenigstens einer, der mit der Ermittlung des Reibwertes (μ) verknüpften Bremsung vorangehenden, Bremsung in den Schritten

   a) Erfassung der momentanen Betätigungsenergie (p),

   b) wenigstens näherungsweise Erfassung der der in a) genannten Betätigungsenergie (p) zugeordneten momentanen Fahrzeugverzögerung (b),

c) Berechnung des Fahrzeuggewichts (G) aus den in a) und b) genannten Werten und dem Radbremsfaktor (A)

erfolgt.

3. Verfahren zur wenigstens näherungsweisen Ermittlung des bei wenigstens einer Bremsung zwischen dem wenigstens einen mit einer durch Betätigungsenergie ( ) betätigten Radbremse (15 bzw. 21) versehenen Rad (16 bzw. 20) eines Fahrzeugs und der Fahrbahn ausgenutzten Reibwertes ($\mu$),
dadurch gekennzeichnet,
daß bei der Bremsung

a) die momentane Fahrzeugverzögerung (b) wenigstens näherungsweise erfaßt,

b) der gesuchte Reibwert ($\mu$) aus der in a) genannten Fahrzeugverzögerung (b) und der Erdbeschleunigung (g) berechnet

werden.

4. Verfahren nach einem der Ansprüche 2 oder 3, dadurch gekennzeichnet, daß die momentane Fahrzeugverzögerung (b) gemessen wird.

5. Verfahren nach einem der Ansprüche 2 oder 3 für ein Fahrzeug mit einem Blockierschutzsystem, dadurch gekennzeichnet, daß die momentane Fahrzeugverzögerung (b) aus dem zeitlichen Verlauf der Referenzgeschwindigkeit des Blockierschutzsystems berechnet wird.

6. Verfahren nach einem der vorhergehenden Ansprüche für ein Fahrzeug, welches wenigstens ein zweites mit einer durch Betätigungsenergie (p) betätigten Radbremse versehenes Rad aufweist, wobei die Räder an einer Achse (V bzw. H) beiderseits der Fahrzeuglängsachse angeordnet sind und den gleichen Fahrzeuggewichtsanteil (z. B. $\frac{GV}{2}$) tragen,
dadurch gekennzeichnet,
daß der auf das eine Rad (20) entfallende Reibwert ($\mu$R) aus den momentanen Betätigungsenergien (pVL, pVR), den Radbremsfaktoren (AVR, AVL), der momentanen Fahrzeugverzögerung (b) und der Erdbeschleunigung (g) berechnet wird.

7. Verfahren nach einem der vorhergehenden Ansprüche für ein Fahrzeug, welches wenigstens ein zweites, mit einer durch Betätigungsenergie (p) betätigten Radbremse versehenes Rad aufweist, wobei die Räder an einer Achse (V bzw. H) beiderseits der Fahrzeuglängsachse angeordnet sind und den gleichen Fahrzeuggewichtsanteil (z. B. $\frac{GV}{2}$) tragen, wobei die Radbremsfaktoren (z. B. AV) auf beiden Fahrzeugseiten gleich sind,
dadurch gekennzeichnet,
daß der auf das eine Rad (20) entfallende Reibwert ($\mu$R) aus den momentanen Betätigungsenergien (pVL, pVR), der momentanen Fahrzeugverzögerung (b) und der Erdbeschleunigung (g) berechnet wird.